# FASCICULE DE BREVET EUROPEEN

(11) **EP 2 503 972 B1**
(45) Date de publication et mention de la délivrance du brevet: **04.07.2018**
(21) Numéro de dépôt: 10799094.7
(22) Date de dépôt: 23.11.2010
(51) Int. Cl.: A61F 9/08, G09B 21/00

(54) **PROCÉDÉ D'INTERACTION À L'AIDE DE STIMULATEURS SENSORIELS ET UTILISATION DU PROCÉDÉ DANS DES OUTILS DE COMMUNICATION À DISTANCE DE MÊME QUE DANS UN SYSTÈME D'INTERACTION À DISTANCE**
INTERAKTIONSVERFAHREN MIT HILFE VON SENSORSTIMULATOREN UND UMSETZUNG DES VERFAHRENS IN GERÄTEN ZUR KOMMUNIKATION AUF DISTANZ SOWIE IN EINEM INTERAKTIONSSYSTEM AUF DISTANZ
INTERACTION METHOD INVOLVING SENSORY STIMULATORS AND USE OF THE METHOD IN DEVICES FOR REMOTE COMMUNICATION AS WELL AS IN A REMOTE INTERACTION SYSTEM

(30) Priorité: 23.11.2009 FR 0905621
(43) Date de publication de la demande: 03.10.2012
(73) Titulaire: Université de Technologie de Compiègne, 60200 Compiegne (FR)
(72) Inventeur: LENAY, Charles, 60200 Compiegne (FR); AUBERT, Dominique, 02200 Soissons (FR); MAILLET, Barthélémy, 45430 Checy (FR)
(74) Mandataire: Novagraaf Technologies
(86) Numéro de dépôt international: PCT/FR2010/052489
(87) Numéro de publication internationale: WO 2011/061462

(56) Documents cités:
- WO-A1-93/03468
- WO-A2-03/034959
- WO-A2-2008/015365
- MOUNIA ZIAT ET AL: "Perceptive Supplementation for an Access to Graphical Interfaces", 22 juillet 2007 (2007-07-22), UNIVERSAL ACESS IN HUMAN COMPUTER INTERACTION. COPING WITH DIVERSITY; [LECTURE NOTES IN COMPUTER SCIENCE], SPRINGER BERLIN HEIDELBERG, BERLIN, HEIDELBERG, PAGE(S) 841 - 850, XP019063337, ISBN: 978-3-540-73278-5 page 842; figure 1 page 847

## Description

L'invention concerne des outils de communication à distance entre au moins deux utilisateurs, de préférence, entre deux utilisateurs dont l'un au moins est malvoyant, voire aveugle.

Plus précisément, l'invention concerne, selon un premier de ses aspects, un procédé d'interaction entre au moins un premier stimulateur sensoriel et au moins un deuxième stimulateur sensoriel distinct du premier stimulateur sensoriel, le premier stimulateur sensoriel comportant au moins un premier organe haptique, le deuxième stimulateur sensoriel comportant au moins un deuxième organe haptique, les premier et deuxième stimulateurs sensoriels étant représentés dans un espace virtuel commun, leurs représentations étant adaptées à partager cet espace virtuel commun, la représentation dans l'espace virtuel commun du premier stimulateur sensoriel comprenant au moins un premier corps image lié à au moins un premier corps percevant via un premier lien virtuel, le premier organe haptique étant adapté à déplacer au moins le premier corps percevant dans l'espace virtuel commun, la représentation du deuxième stimulateur sensoriel dans l'espace virtuel commun comprenant au moins un deuxième corps image lié à au moins un deuxième corps percevant via un deuxième lien virtuel, le deuxième organe haptique étant adapté à déplacer au moins le deuxième corps percevant dans l'espace virtuel commun, le premier stimulateur sensoriel étant adapté à se mettre dans un premier état actif lorsque le premier corps percevant se déplaçant dans l'espace virtuel commun touche le deuxième corps image dans l'espace virtuel commun.

Selon l'invention, on entend par espace virtuel un espace à une, deux ou trois, dimensions reconstitué par ordinateur, et dans lequel un utilisateur peut se déplacer en utilisant des outils de pilotage tels que, par exemple, un manche à balai ou 'joy-stick', souris, plage tactile, ....

Un tel procédé d'interaction bien connu de l'homme du métier est décrit, par exemple, dans la demande de brevet français FR 2 831 428 A1, dont le membre de famille WO03034959 constitue le préambule de la revendication 1. Ce procédé permet à au moins un utilisateur aveugle de percevoir une forme. Ainsi, grâce à ce procédé d'interaction, un premier et un deuxième utilisateurs aveugles munis respectivement du premier et du deuxième stimulateurs sensoriels, peuvent se rencontrer de manière virtuelle (c'est-à-dire, étant physiquement à distance l'un de l'autre) dans l'espace virtuel commun lorsque le premier corps percevant (représentatif du premier stimulateur sensoriel) y rentre en contact avec le deuxième corps image (représentatif du deuxième stimulateur sensoriel). Cependant, cette interaction basée exclusivement sur la perception de la forme reste a priori incomplète et, donc insatisfaisante, car elle ne permet pas de produire et/ou de transmettre de manière simultanée tout au long de leur rencontre, d'une part, une première pluralité de premiers états émotionnels (joie, chagrin, colère, excitation, etc.) propre au premier utilisateur à destination du deuxième utilisateur et, d'autre part, une deuxième pluralité de deuxièmes états émotionnels (joie, chagrin, colère, excitation, etc.) propre au deuxième utilisateur à destination du premier utilisateur.

La présente invention, qui s'appuie sur cette observation originale, a principalement pour but de proposer un procédé d'interaction visant au moins à réduire l'une au moins des limitations précédemment évoquées. A cette fin, le procédé d'interaction, par ailleurs conforme à la définition générique qu'en donne le préambule ci-dessus, est défini par les caractéristiques de la revendication 1. L'utilisation du procédé dans des outils de communication à distance et de manière haptique entre deux êtres vivants est définie par la revendication 14, l'utilisation du procédé dans un système d'interaction à distance est définie par la revendication 15. Ce procédé est tel qu'il comporte au moins une première étape de déformation d'au moins le premier corps image dans l'espace virtuel commun lorsqu'au moins le premier stimulateur sensoriel se trouve dans le premier état actif, la première étape de déformation étant initiée à l'aide du premier organe haptique.

Grâce à ce fonctionnement, la première pluralité des premiers états émotionnels propre au premier utilisateur (muni du premier stimulateur sensoriel) peut être traduite en une première succession des déformations du premier corps image. Cela contribue à enrichir la communication entre les premier et deuxième utilisateurs dont l'un au moins est malvoyant, voire aveugle. Le deuxième stimulateur sensoriel est adapté à se mettre dans un deuxième état actif lorsque le deuxième corps percevant se déplaçant dans l'espace virtuel commun touche le premier corps image dans l'espace virtuel commun. Le procédé d'interaction comporte au moins une deuxième étape de déformation d'au moins le deuxième corps image dans l'espace virtuel commun lorsqu'au moins le deuxième stimulateur sensoriel se trouve dans le deuxième état actif, la deuxième étape de déformation étant initiée à l'aide du deuxième organe haptique.

Grâce à ce fonctionnement, la deuxième pluralité des deuxièmes états émotionnels propre au deuxième utilisateur (muni du deuxième stimulateur sensoriel) peut être traduite en une deuxième succession des déformations du deuxième corps image. Cela contribue à enrichir la communication entre les premier et deuxième utilisateurs dont l'un au moins est malvoyant, voire aveugle.

Selon une particularité, toute déformation du premier ou du deuxième corps image entraîne, ou est initiée, par une déformation correspondante du premier corps percevant ou du deuxième corps percevant, respectivement.

De préférence, le procédé d'interaction comporte au moins un mode exploratoire dans lequel les premier et deuxième liens virtuels sont indéformables dans l'espace virtuel commun. Le premier corps image est adapté à se déplacer dans l'espace virtuel commun avec le premier corps percevant. Le deuxième corps image est adapté à se déplacer dans l'espace virtuel commun avec le deuxième corps percevant. Les première et deuxième étapes de déformation s'opèrent au moins au cours du mode exploratoire.

Grâce à ce fonctionnement, le premier utilisateur (muni du premier stimulateur sensoriel) ne perçoit pas le premier corps image du premier stimulateur sensoriel avec le premier corps percevant. De même, le deuxième utilisateur (muni du deuxième stimulateur sensoriel) ne perçoit pas le deuxième corps image du deuxième stimulateur sensoriel avec le deuxième corps percevant. Ainsi, la première pluralité des premiers états émotionnels propre au premier utilisateur ne peut être perçue que par le deuxième utilisateur et non pas par le premier utilisateur lui-même. De même, la deuxième pluralité des deuxièmes états émotionnels propre au deuxième utilisateur ne peut être perçue que par le premier utilisateur et non pas par le deuxième utilisateur lui-même. Par conséquent, grâce à ce fonctionnement particulier, la communication s'établissant, avec l'aide du procédé d'interaction selon l'invention, entre les premier et deuxième utilisateurs dont l'un au moins est malvoyant, voire aveugle, tend à approcher en termes de la richesse émotionnelle à une communication entre deux voyants où chacun aperçoit le visage de l'autre et, donc, via l'expression du visage de l'autre, une palette des émotions de l'autre, sans pour autant voir son propre visage et, par conséquent, sans apercevoir ses propres émotions traduites par les expressions de son propre visage.

Selon une particularité, le premier corps image recouvre le deuxième corps percevant et le deuxième corps image recouvre le premier corps percevant.

Grâce à ce fonctionnement, au moins le mode exploratoire offre aux premier et deuxième utilisateurs muni respectivement des premier et deuxième stimulateurs sensoriels la possibilité de dialoguer l'un avec l'autre en se caressant mutuellement : le premier utilisateur déformant le premier corps image en contact avec le deuxième corps percevant du deuxième utilisateur pendant que ce deuxième utilisateur déforme le deuxième corps image en contact avec le premier corps percevant du premier utilisateur. Cela élargit les possibilités fonctionnelles du procédé d'interaction, y compris pour créer une sensation de contact intime entre les premier et deuxième utilisateurs se trouvant à distance l'un de l'autre. En outre, cela permet de fiabiliser la communication ainsi établie en identifiant avec certitude les déformations de faible amplitude induites au premier (deuxième) corps image par le premier (deuxième) utilisateur. Le procédé d'interaction comporte :
▪ une étape de positionnement des premier et deuxième stimulateurs sensoriels dans un espace physique réel à l'aide des moyens de géolocalisation embarqués respectivement par les premier et deuxième stimulateurs sensoriels,
▪ une étape de reconstitution de l'espace physique réel dans l'espace virtuel commun,
▪ une étape de projection dans l'espace virtuel commun des déplacements respectifs réels des premier et deuxième stimulateurs sensoriels dans l'espace physique réel.

Grâce à ce fonctionnement, il est possible de baliser, à partir de l'espace virtuel commun, l'espace physique réel pour y créer des tracés (zones, limites) invisibles géolocalisés, par exemple, des chemins sécurisés pour les malvoyants et/ou aveugles. De même, il est possible de baliser, à partir de l'espace physique réel, l'espace virtuel commun pour y créer des tracés (zones, limites) virtuels représentatifs d'une ou plusieurs tâche(s) (par exemple, identifier sur une carte virtuelle reconstituant l'espace physique réel propre à une ville, un arrêt de bus, une pharmacie, un passage piéton, etc). Ce fonctionnement permet aux malvoyants et/ou aveugles de se retrouver les uns avec les autres, par exemple, dans un premier endroit préalablement convenu. Dans un autre exemple, ce fonctionnement avantageux permet aussi de se retrouver dans un deuxième endroit non convenu (distinct dudit premier endroit convenu), quand l'information reçue par l'un des utilisateurs est seulement la direction dans laquelle se trouve l'autre des utilisateurs.

De préférence, au moins la première étape de déformation est adaptée à exprimer, via le premier organe haptique, une direction privilégiée dans l'espace physique réel.

Cela contribue à rendre plus aisé le guidage à distance dans l'espace physique réel du deuxième utilisateur par le premier utilisateur et, in fine, à élargir les possibilités fonctionnelles du procédé d'interaction selon l'invention.

De préférence, au moins la deuxième étape de déformation est adaptée à exprimer, via le deuxième organe haptique, la direction privilégiée dans l'espace physique réel.

Cela contribue à créer un lien de retour pour rendre encore plus aisé le guidage à distance dans l'espace physique réel du deuxième utilisateur par le premier utilisateur (et vice versa) et, in fine, à élargir les possibilités fonctionnelles du procédé d'interaction selon l'invention.

Selon un deuxième de ses aspects, l'invention concerne l'utilisation du procédé dans un système d'interaction à distance selon la revendication 15, le système d'interaction comportant un stimulateur sensoriel comportant un premier organe haptique et des premiers moyens de télécommunication adaptés à communiquer au moins avec un équipement distant (par exemple, un autre stimulateur sensoriel). Ledit stimulateur sensoriel est adapté à réaliser le procédé d'interaction selon l'invention (décrite ci-dessus). Le stimulateur sensoriel comporte en outre au moins une première couche logicielle adaptée à représenter un espace virtuel commun conçu pour être partagé avec l'équipement distant, le stimulateur sensoriel étant représenté dans l'espace virtuel commun par au moins un premier corps image lié à au moins un premier corps percevant via un premier lien virtuel, le premier organe haptique étant au moins adapté à déplacer au moins le premier corps percevant dans l'espace virtuel commun.

Grâce à ces agencements, les premier et deuxième utilisateurs équipés chacun avec le stimulateur sensoriel selon l'invention peuvent communiquer à distance l'un avec l'autre même dans des zones géographiques couvertes par des réseaux de télécommunication conventionnels, en particulier, ceux sans fil du type GSM, GPRS, GALILEO, GLONASS, WI-FI etc.

De préférence, le premier organe haptique comprend :
▪ un premier écran tactile adapté à commander les déplacements du premier corps percevant dans l'espace virtuel commun,
▪ au moins deux premiers traducteurs d'expression sensorielle distincts l'un de l'autre et adaptés à traduire au moins un premier état actif propre à un premier événement sélectif en rapport avec le premier corps percevant en déplacement dans l'espace virtuel commun,
▪ une première nappe de capteurs de pression adaptée à déformer au moins le premier corps image dans l'espace virtuel commun au moins lorsque le stimulateur sensoriel se trouve dans le premier état actif.

Ces agencements contribuent à rendre l'utilisation du stimulateur sensoriel davantage intuitive et aisée. L'invention peut concerner un système d'interaction comportant au moins un premier stimulateur sensoriel et au moins un deuxième stimulateur sensoriel distinct du premier stimulateur sensoriel, les premier et deuxième stimulateurs sensoriels étant représentés dans un espace virtuel commun, le premier stimulateur sensoriel comportant au moins un premier organe haptique, le deuxième stimulateur sensoriel comportant au moins un deuxième organe haptique, le premier stimulateur sensoriel étant représenté dans l'espace virtuel commun par au moins un premier corps image lié à au moins un premier corps percevant via un premier lien virtuel, le premier organe haptique étant adapté à déplacer au moins le premier corps percevant dans l'espace virtuel commun, le deuxième stimulateur sensoriel étant représenté dans l'espace virtuel commun par au moins un deuxième corps image lié à au moins un deuxième corps percevant via un deuxième lien virtuel, le deuxième organe haptique étant adapté à déplacer au moins le deuxième corps percevant dans l'espace virtuel commun, le premier stimulateur sensoriel étant adapté à se mettre dans un premier état actif lorsque le premier corps percevant se déplaçant dans l'espace virtuel commun touche le deuxième corps image dans l'espace virtuel commun. Ce système d'interaction est adapté à réaliser le procédé d'interaction selon l'invention et comprend en outre un serveur distant comportant au moins une deuxième couche logicielle adaptée à représenter l'espace virtuel commun. Les premier et deuxième stimulateurs sensoriels comportent respectivement des premier et deuxième moyens de télécommunication adaptés à communiquer au moins avec le serveur distant.

Grâce à ces agencements, il est possible de gérer les communications entre les premier et deuxième stimulateurs sensoriels à partir d'un centre de communication distant lié au serveur distant à l'aide d'un réseau de télécommunication et/ou un réseau internet. Cela contribue à sécuriser les échanges entre les malvoyants et/ou aveugles, l'opérateur voyant du centre de communication pouvant intervenir (par exemple, en modifiant l'espace virtuel commun), en particulier suite à un appel de détresse émanant de l'un au moins parmi les utilisateurs malvoyants et/ou aveugles utilisant le système d'interaction selon l'invention. Le deuxième stimulateur sensoriel est adapté à se mettre dans un deuxième état actif lorsque le deuxième corps percevant se déplaçant dans l'espace virtuel commun touche le premier corps image dans l'espace virtuel commun. Le premier organe haptique comprend :
▪ un premier écran tactile adapté à commander les déplacements du premier corps percevant dans l'espace virtuel commun,
▪ au moins deux premiers traducteurs d'expression sensorielle distincts l'un de l'autre et adaptés à traduire au moins le premier état actif du premier stimulateur sensoriel,
▪ une première nappe de capteurs de pression adaptée à déformer au moins le premier corps image dans l'espace virtuel commun au moins lorsque le premier stimulateur sensoriel se trouve dans le premier état actif.
En outre, le deuxième organe haptique comprend :
▪ un deuxième écran tactile adapté à commander les déplacements du deuxième corps percevant dans l'espace virtuel commun,
▪ au moins deux deuxièmes traducteurs d'expression sensorielle distincts l'un de l'autre et adaptés à traduire au moins le deuxième état actif du deuxième stimulateur sensoriel,
▪ une deuxième nappe de capteurs de pression adaptée à déformer au moins le deuxième corps image dans l'espace virtuel commun au moins lorsque le deuxième stimulateur sensoriel se trouve dans le deuxième état actif.

Ces agencements contribuent à rendre l'utilisation du système d'interaction selon l'invention plus aisée, conviviale et intuitive pour, in fine, enrichir la communication entre les utilisateurs utilisant ledit système d'interaction et, en particulier, entre les aveugles et/ou malvoyants.

Subsidiairement, le procédé d'interaction selon l'invention, le stimulateur sensoriel selon l'invention et le système d'interaction selon l'invention peuvent être utilisés pour communiquer entre différents êtres vivants de manière haptique : par exemple, pour assurer la communication entre un humain et un animal (par exemple, entre l'aveugle et son chien-guide), voire entre deux animaux (par exemple, entre deux animaux dressés commandant l'un l'autre dans un cirque).

D'autres caractéristiques et avantages de l'invention ressortiront clairement de la description qui en est faite ci-après, à titre indicatif et nullement limitatif, en référence aux dessins annexés, dans lesquels :

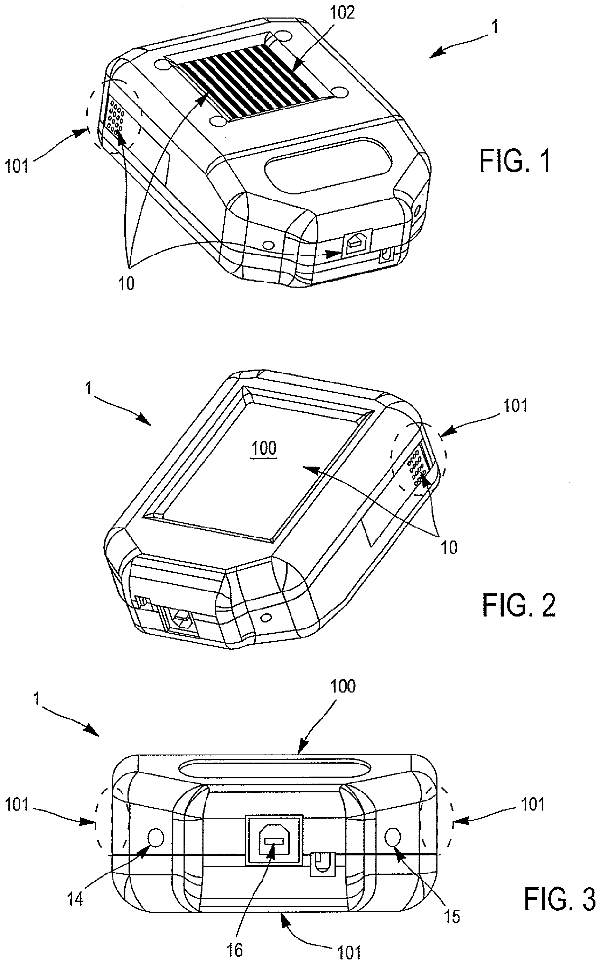

les figures 1 à 3 représentent de manière schématique en vues simplifiées en perspective un premier stimulateur sensoriel utilisé pour l'invention : (a) en vue de dessous faisant apparaître une première nappe de capteurs de pression référencée 102 (figure 1) ; (b) en vue de dessus faisant apparaître un premier écran tactile référencé 100 (figure 2) ; (c) en vue de face faisant apparaître une première source référencée 16 d'énergie électrique (figure 3),

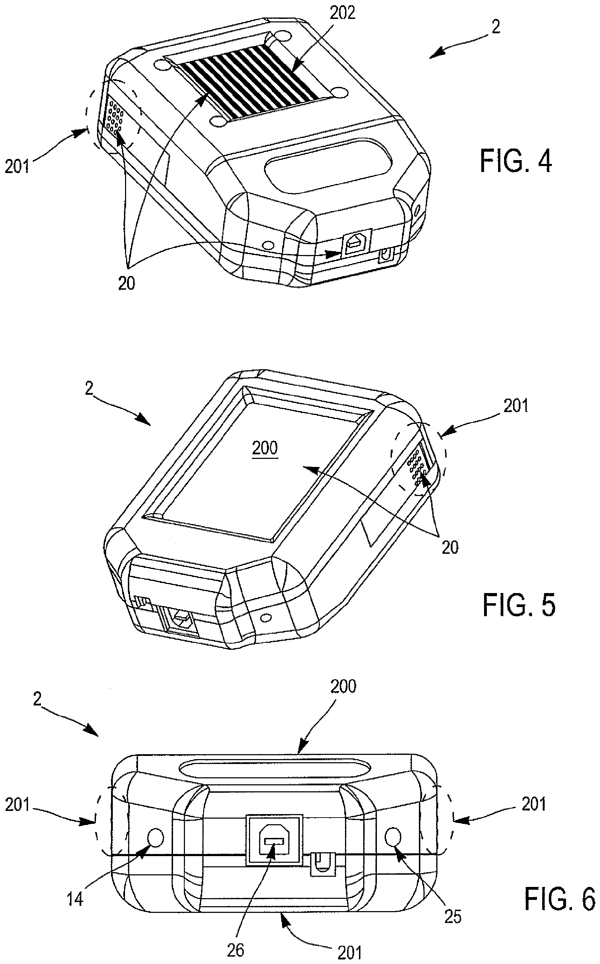

les figures 4 à 6 représentent de manière schématique en vues simplifiées en perspective un deuxième stimulateur sensoriel utilisé pour l'invention : (a) en vue de dessous faisant apparaître une deuxième nappe de capteurs de pression référencée 202 (figure 4) ; (b) en vue de dessus faisant apparaître un premier écran tactile référencé 200 (figure 5) ; (c) en vue de face faisant apparaître une deuxième source référencée 26 d'énergie électrique (figure 6),

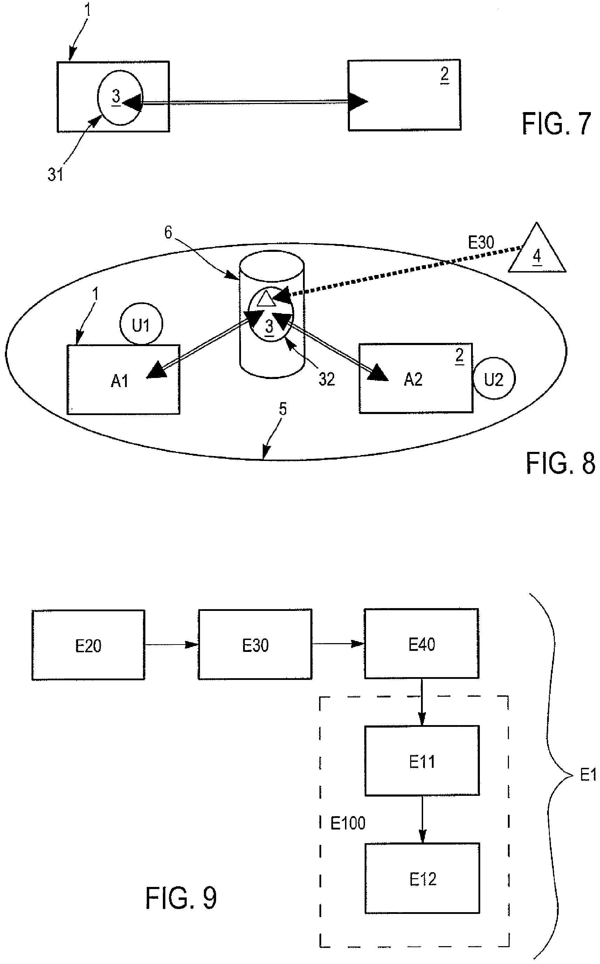

la figure 7 représente de manière schématique une variante du premier stimulateur sensoriel utilisé pour l'invention comportant une première couche logicielle adaptée à représenter un espace virtuel commun conçu pour être partagé avec un équipement distant (de préférence, un autre stimulateur sensoriel, par exemple, le deuxième stimulateur sensoriel),
la figure 8 représente de manière schématique un système d'interaction utilisé pour l'invention comportant un serveur distant comportant une deuxième couche logicielle adaptée à représenter l'espace virtuel commun, les premier et deuxième stimulateurs sensoriels communiquant l'un avec l'autre dans l'espace virtuel commun via le serveur distant à l'aide de la deuxième couche logicielle,
la figure 9 représente de manière schématique certaines étapes du procédé d'interaction selon l'invention entre les premier et deuxième stimulateurs sensoriels, et

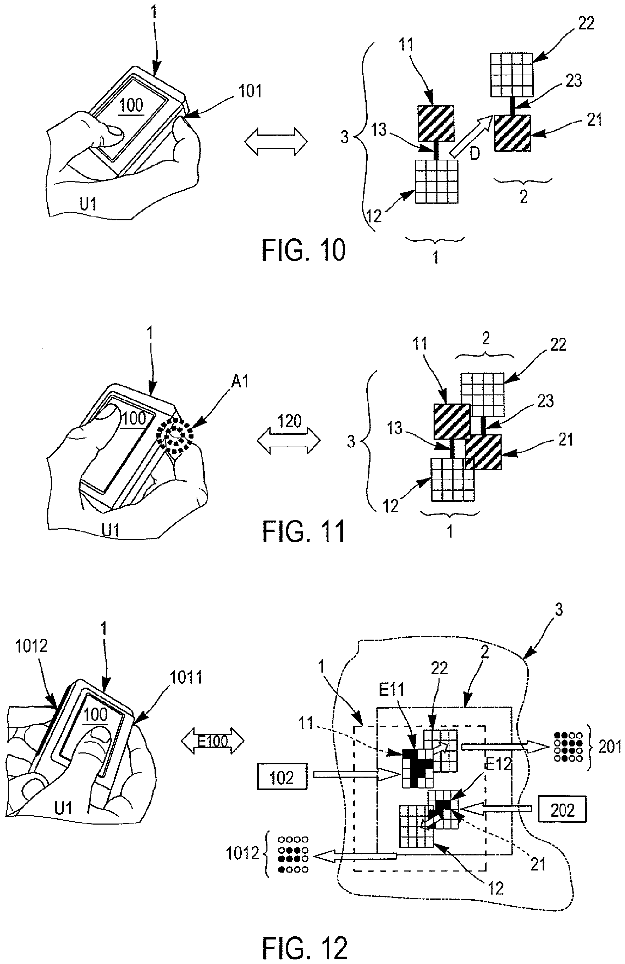

les figures 10 à 12 représentent de manière schématique le premier stimulateur sensoriel utilisé pour l'invention comportant un premier organe haptique et représenté dans l'espace virtuel commun par un premier corps image lié à un premier corps percevant, le premier stimulateur sensoriel interagissant avec le deuxième stimulateur sensoriel utilisé pour l'invention représenté dans l'espace virtuel commun par un deuxième corps image lié à un deuxième corps percevant : (a) le premier corps percevant se déplaçant, piloté par le premier organe haptique, dans l'espace virtuel commun à la recherche du deuxième corps percevant (figure 10) ; (b) le premier corps percevant en contact, dans l'espace virtuel commun, avec le deuxième corps percevant (figure 11); (c) illustration d'une variante d'un mode exploratoire du procédé d'interaction selon l'invention avec les déformations respectives du premier et deuxième corps image (figure 12).

Comme annoncé précédemment et illustré sur les figures 1-12, l'invention concerne, selon un premier de ces aspects, un procédé d'interaction E1 entre au moins un premier stimulateur sensoriel 1 et au moins un deuxième stimulateur sensoriel 2 distinct du premier stimulateur sensoriel 1. Les premier et deuxième stimulateurs sensoriels 1, 2 sont représentés dans un espace virtuel commun 3. Le premier stimulateur sensoriel 1 comporte au moins un premier organe haptique 10. Le deuxième stimulateur sensoriel 2 comporte au moins un deuxième organe haptique 20. Le premier stimulateur sensoriel 1 est représenté dans l'espace virtuel commun 3 par au moins un premier corps image 11 lié à au moins un premier corps percevant 12 via un premier lien virtuel 13. Le premier organe haptique 10 est adapté à déplacer (flèche D sur la figure 10) au moins le premier corps percevant 12 dans l'espace virtuel commun 3. Le deuxième stimulateur sensoriel 2 est également représenté dans l'espace virtuel commun 3 par au moins un deuxième corps image 21 lié à au moins un deuxième corps percevant 22 via un deuxième lien virtuel 23. Le deuxième organe haptique 20 est adapté à déplacer au moins le deuxième corps percevant 22 dans l'espace virtuel commun 3. Le premier stimulateur sensoriel 1 est adapté à se mettre dans un premier état actif A1 lorsque le premier corps percevant 12 se déplaçant dans l'espace virtuel commun 3 touche le deuxième corps image 21 dans l'espace virtuel commun 3.

Selon l'invention, le procédé d'interaction E1 comporte au moins une première étape de déformation E11 d'au moins le premier corps image 11 dans l'espace virtuel commun 3 lorsqu'au moins le premier stimulateur sensoriel 1 se trouve dans le premier état actif A1. La première étape de déformation E11 est initiée par le premier utilisateur à l'aide du premier organe haptique 10.

Ladite déformation peut par exemple consister en un étirement du premier corps image. Cet étirement peut par exemple être directionnel et éventuellement orienté vers le deuxième corps image de façon à tenter d'être touché par le deuxième corps percevant. Ladite déformation peut également consister à augmenter et/ou restreindre la taille du premier corps image.

Afin d'illustrer que, grâce aux caractéristiques techniques ci-dessus la première pluralité des premiers états émotionnels propre au premier utilisateur (muni du premier stimulateur sensoriel) peut être traduite en une première succession des déformations du premier corps image pour contribuer à enrichir la communication entre les premier et deuxième utilisateurs dont l'un au moins est malvoyant, voire aveugle, considérons la mise en situation suivante.

Deux personnes voyantes se déplacent dans le monde réel. La première personne voit la deuxième, sans que cette dernière ne l'ait vue. Si elle le souhaite, la première personne interpelle la deuxième et/ou se déplace vers elle pour manifester sa présence. Si au contraire la première personne ne veut pas être vue par la deuxième, elle se dissimule et/ou change de direction de déplacement. Dans ce contexte, on comprend que, lorsque le premier utilisateur déforme son corps image en un étirement, éventuellement orienté vers le deuxième corps image de façon à tenter d'être touché par le deuxième corps percevant, ou en un agrandissement de son corps image jusqu'à être touché par le deuxième corps percevant, correspond à tenter d'interpeller ou à interpeller le deuxième utilisateur en manifestant sa présence, respectivement. Au contraire, un étirement du premier corps image dans une direction opposée au deuxième corps percevant ou une réduction de la taille du premier corps image correspond à une volonté de dissimulation, voire de fuite, du premier utilisateur par rapport au deuxième utilisateur. On comprend alors que le premier utilisateur manifeste par la déformation de son corps image l'envie, voire la joie ou l'excitation, de se manifester au deuxième utilisateur, ou, au contraire, l'absence d'envie, voire la peur, de rencontrer le deuxième utilisateur. Au moins en ce sens, la présente invention contribue à enrichir la communication entre les premier et deuxième utilisateurs dont l'un au moins est malvoyant, voire aveugle. Le deuxième stimulateur sensoriel 2 est adapté à se mettre dans un deuxième état actif A2 lorsque le deuxième corps percevant 22 se déplaçant dans l'espace virtuel commun 3 touche le premier corps image 11 dans l'espace virtuel commun 3. Le procédé d'interaction E1 comporte au moins une deuxième étape de déformation E12 d'au moins le deuxième corps image 21 dans l'espace virtuel commun 3 lorsqu'au moins le deuxième stimulateur sensoriel 2 se trouve dans le deuxième état actif A2. La deuxième étape de déformation E12 est initiée par le deuxième utilisateur à l'aide du deuxième organe haptique 20.

Avantageusement, toute déformation du premier ou du deuxième corps image entraîne, ou est initiée par, une déformation correspondante du premier corps percevant ou du deuxième corps percevant, respectivement. Les déformations initiées par l'utilisateur à l'aide de son organe haptique ne sont donc pas limitées aux déformations de son seul corps image.

Avantageusement, le procédé d'interaction E1 comporte au moins un mode exploratoire E100 (figure 9) dans lequel les premier et deuxième liens virtuels 13, 23, sont indéformables dans l'espace virtuel commun 3. Le premier corps image 11 est adapté à se déplacer dans l'espace virtuel commun 3 avec le premier corps percevant 12. Le deuxième corps image 21 est adapté à se déplacer dans l'espace virtuel commun 3 avec le deuxième corps percevant 22. Les première et deuxième étapes de déformation E11, E12 s'opèrent au moins au cours du mode exploratoire E100.

Selon une particularité, le premier corps image 11 recouvre le deuxième corps percevant 22 et le deuxième corps image 21 recouvre le premier corps percevant 12. Le procédé d'interaction E1 comporte (figure 9) :
▪ une étape de positionnement E20 des premier et deuxième stimulateurs sensoriels 1, 2 dans un espace physique réel 4 à l'aide de moyens de géolocalisation 14 embarqués respectivement par les premier et deuxième stimulateurs sensoriels 1, 2,
▪ une étape de reconstitution E30 de l'espace physique réel 4 dans l'espace virtuel commun 3,
▪ une étape de projection E40 dans l'espace virtuel commun 3 des déplacements respectifs réels des premier et deuxième stimulateurs sensoriels 1, 2 dans l'espace physique réel 4.

De préférence, au moins la première étape de déformation E11 est adaptée à exprimer, via le premier organe haptique 10, une direction privilégiée dans l'espace physique réel 4.

Selon un deuxième et un troisième de ses aspects, l'invention concerne l'utilisation du procédé comme définie dans les revendications 14 ou 15. Un stimulateur sensoriel 1 approprié comporte un premier organe haptique 10 et des premiers moyens de télécommunication 15 adaptés à communiquer au moins avec un équipement distant 2. Ce stimulateur sensoriel 1 est adapté à réaliser le procédé d'interaction E1 selon l'invention décrit ci-dessus. Ce stimulateur sensoriel 1 comporte en outre au moins une première couche logicielle 31 adaptée à représenter un espace virtuel commun 3 conçu pour être partagé avec l'équipement distant 2 (par exemple, le deuxième stimulateur sensoriel 2, comme illustré sur la figure 7). Le stimulateur sensoriel 1 est toujours représenté dans l'espace virtuel commun 3 par au moins un premier corps image 11 lié à au moins un premier corps percevant 12 via le premier lien virtuel 13. De plus, le premier organe haptique 10 est toujours au moins adapté à déplacer au moins le premier corps percevant 12 dans l'espace virtuel commun 3.

De préférence, le premier organe haptique 10 comprend (Cf. figures 1 à 3) :
▪ un premier écran tactile 100 adapté à commander les déplacements du premier corps percevant 12 dans l'espace virtuel commun 3,
▪ au moins deux premiers traducteurs 101 d'expression sensorielle distincts l'un de l'autre et adaptés à traduire au moins un premier état actif A1 propre à un premier événement sélectif 120 (figure 11) en rapport avec le premier corps percevant 12 en déplacement dans l'espace virtuel commun 3,
▪ une première nappe 102 de capteurs de pression adaptée à déformer au moins le premier corps image 11 dans l'espace virtuel commun 3 au moins lorsque le stimulateur sensoriel 1 se trouve dans le premier état actif A1.

Le premier stimulateur sensoriel comprend en outre une première source 16 d'énergie électrique (par exemple, une entrée pour le secteur, comme illustrée sur les figures 1-6 et/ou une batterie non représentée) adaptée à alimenter au moins le premier organe haptique 10 en énergie électrique. La figure 8 montre un système d'interaction 5 comportant au moins le premier stimulateur sensoriel 1 et au moins le deuxième stimulateur sensoriel 2 distinct du premier stimulateur sensoriel 1 . Le système d'interaction 5 est adapté à réaliser le procédé d'interaction E1 selon l'invention et comprend en outre un serveur distant 6 comportant au moins une deuxième couche logicielle 32 adaptée à représenter l'espace virtuel commun 3 (figure 8). Les premier et deuxième stimulateurs sensoriels 1, 2 comportent respectivement des premier et deuxième moyens de télécommunication 15, 25 adaptés à communiquer au moins avec le serveur distant 6. Le deuxième stimulateur sensoriel 2 est adapté à se mettre dans un deuxième état actif A2 lorsque le deuxième corps percevant 22 se déplaçant dans l'espace virtuel commun 3 touche le premier corps image 11 dans l'espace virtuel commun 3.

Le deuxième organe haptique 20 comprend (Cf. figures 4 à 6) :
▪ un deuxième écran tactile 200 adapté à commander les déplacements du deuxième corps percevant 22 dans l'espace virtuel commun 3,
▪ au moins deux deuxièmes traducteurs 201 d'expression sensorielle distincts l'un de l'autre et adaptés à traduire au moins le deuxième état actif A2 du deuxième stimulateur sensoriel 2,
▪ une deuxième nappe 202 de capteurs de pression adaptée à déformer au moins le deuxième corps image 21 dans l'espace virtuel commun 3 au moins lorsque le deuxième stimulateur sensoriel 2 se trouve dans le deuxième état actif A2.

Le deuxième stimulateur sensoriel comprend en outre une deuxième source 26 d'énergie électrique (par exemple, une entrée pour le secteur, comme illustrée sur les figures 4-6 et/ou une batterie non représentée) adaptée à alimenter au moins le deuxième organe haptique 20 en énergie électrique.

Il doit être compris que les premiers traducteurs 101 d'expression sensorielle et les deuxièmes traducteurs 201 d'expression sensorielle peuvent représentés les expressions sensorielles variées et, en particulier, celles de nature tactile, et/ou de nature sonore, et/ou de nature visuelle, et/ou de nature olfactive. Par conséquent, les premiers traducteurs 101 et les deuxièmes traducteurs 201 peuvent comporter des moyens techniques appropriés, adaptés à reproduire des sollicitations mécaniques (par exemple, des picots piézoélectriques, des vibreurs électromagnétiques), des émissions sonores (par exemple, des haut-parleurs), des lumières (par exemple, des diodes, des lampes), des odeurs (par exemple, des vaporisateurs mono-odeur ou des vaporisateurs multi-odeurs).

Il doit également être compris que le premier événement sélectif 120 (évoqué ci-dessus en rapport avec le premier corps percevant 12 en déplacement dans l'espace virtuel commun 3) est représentatif au moins d'un toucher par le premier corps percevant 12 du deuxième corps image 21 dans l'espace virtuel commun 3.

La figure 12 représente une variante enrichie du mode exploratoire E100 permis par une version améliorée du premier stimulateur sensoriel 1. Les deux premiers traducteurs d'expression sensorielle de ladite version améliorée du premier stimulateur sensoriel 1 sont référencés 1011 (à droite sur la photo de la figure 12 adapté à être en contact avec un doigt (index droit) de la main droite du premier utilisateur U1) et 1012 (à gauche sur la photo de la figure 12 adapté à être en contact avec un doigt (index gauche) de la main gauche du premier utilisateur U1). Dans cette variante du mode exploratoire E100, le premier traducteur 1011, dite premier traducteur 1011 droit, est similaire au premier traducteur 101 tel qu'il est évoqué précédemment en rapport avec les figures 2, 10, 11. Ce premier traducteur 1011 droit est adapté à traduire le premier état actif A1 du premier stimulateur sensoriel 1 (cas illustré sur la figure 11 où le premier corps percevant 12 touche le deuxième corps image 21 dans l'espace virtuel commun 3). Par contre, le premier traducteur 1012, dite premier traducteur 1012 gauche, est adapté à reproduire (pour que le premier utilisateur U1 puisse les sentir) les déformations du deuxième corps image 21 par le deuxième organe haptique 20 (non représenté pour éviter la surcharge de la figure 12) et, en particulier par la deuxième nappe 202 de capteurs de pression du deuxième stimulateur sensoriel 2 (non représenté pour éviter la surcharge de la figure 12).

Grâce à ces agencements et à cette variante du mode exploratoire E100, le premier utilisateur U1 est apte, à la fois, à :
▪ déplacer dans l'espace virtuel commun 3 le premier corps percevant 12 avec le premier doigt (pouce) de la main droite via le premier écran tactile 100,
▪ sentir avec le deuxième doigt (index) de la main droite le toucher par le premier corps percevant 12 du deuxième corps image 21 dans l'espace virtuel commun 3 via le premier traducteur 1011 droit,
▪ modifier en temps réel le premier corps image 11 dans l'espace virtuel commun 3 avec le troisième doigt de la main gauche (majeure invisible sur la photo de la figure 12) via la première nappe 102 de capteurs de pression (invisible sur la photo de la figure 12 car se trouvant à la face opposée à celle avec le premier écran tactile 100),
▪ sentir avec le deuxième doigt (index) de la main gauche les déformations en temps réel du deuxième corps image 21 par le deuxième organe haptique 20 (et, donc, par le deuxième utilisateur non représenté sur la figure 12) via le premier traducteur 1012 gauche.

Ainsi, la variante enrichie du mode exploratoire E100 contribue à enrichir davantage la communication entre les premier et deuxième utilisateurs U1, U2 à l'aide du procédé d'interaction selon l'invention.

## Revendications

1. Procédé d'interaction (E1) entre au moins un premier stimulateur sensoriel (1) et au moins un deuxième stimulateur sensoriel (2) distinct du premier stimulateur sensoriel (1),
le premier stimulateur sensoriel (1) comportant au moins un premier organe haptique (10),
le deuxième stimulateur sensoriel (2) comportant au moins un deuxième organe haptique (20),
les premier et deuxième stimulateurs sensoriels (1), (2) étant représentés dans un espace virtuel commun (3),
leurs représentations étant adaptées à partager cet espace virtuel commun,
la représentation du premier stimulateur sensoriel (1) dans l'espace virtuel commun (3) comprenant au moins un premier corps image (11) lié à au moins un premier corps percevant (12) via un premier lien virtuel (13),
le premier organe haptique (10) étant adapté à déplacer au moins le premier corps percevant (12) dans l'espace virtuel commun (3),
la représentation du deuxième stimulateur sensoriel (2) dans l'espace virtuel commun (3) comprenant au moins un deuxième corps image (21) lié à au moins un deuxième corps percevant (22) via un deuxième lien virtuel (23),
le deuxième organe haptique (20) étant adapté à déplacer au moins le deuxième corps percevant (22) dans l'espace virtuel commun (3),
le premier stimulateur sensoriel (1) étant adapté à se mettre dans un premier état actif (A1) lorsque le premier corps percevant (12) se déplaçant dans l'espace virtuel commun (3) touche le deuxième corps image (21) dans l'espace virtuel commun (3),
le procédé d'interaction (E1) comportant au moins une première étape de déformation (E11) d'au moins le premier corps image (11) dans l'espace virtuel commun (3) lorsqu'au moins le premier stimulateur sensoriel (1) se trouve dans le premier état actif (A1), la première étape de déformation (E11) étant initiée à l'aide du premier organe haptique (10),
le deuxième stimulateur sensoriel (2) étant adapté à se mettre dans un deuxième état actif (A2) lorsque le deuxième corps percevant (22) se déplaçant dans l'espace virtuel commun (3) touche le premier corps image (11) dans l'espace virtuel commun (3), et
le procédé d'interaction (E1) comportant au moins une deuxième étape de déformation (E12) d'au moins le deuxième corps image (21) dans l'espace virtuel commun (3) lorsqu'au moins le deuxième stimulateur sensoriel (2) se trouve dans le deuxième état actif (A2), la deuxième étape de déformation (E12) étant initiée à l'aide du deuxième organe haptique (20),
**caractérisé en ce que** le procédé d'interaction (E1) comporte :
• une étape de positionnement (E20) des premier et deuxième stimulateurs sensoriels (1), (2) dans un espace physique réel (4) à l'aide des moyens de géolocalisation (14) embarqués respectivement par les premier et deuxième stimulateurs sensoriels (1), (2),
• une étape de reconstitution (E30) de l'espace physique réel (4) dans l'espace virtuel commun (3), et
• une étape de projection (E40) dans l'espace virtuel commun (3) des déplacements respectifs réels des premier et deuxième stimulateurs sensoriels (1), (2) dans l'espace physique réel (4).

2. Procédé d'interaction (E1) selon la revendication 1, **caractérisé en ce que** toute déformation du premier ou du deuxième corps image (11), (21) entraîne, ou est initiée par, une déformation correspondante du premier corps percevant (12) ou du deuxième corps percevant (22), respectivement.

3. Procédé d'interaction (E1) selon la revendication 1 ou 2, **caractérisé en ce qu'**il comporte au moins un mode exploratoire (E100) dans lequel les premier et deuxième liens virtuels (13), (23), sont indéformables dans l'espace virtuel commun (3),
**en ce que** le premier corps image (11) est adapté à se déplacer dans l'espace virtuel commun (3) avec le premier corps percevant (12),
**en ce que** le deuxième corps image (21) est adapté à se déplacer dans l'espace virtuel commun (3) avec le deuxième corps percevant (22), et
**en ce que** les première et deuxième étapes de déformation (E11), (E12) s'opèrent au moins au cours du mode exploratoire (E100).

4. Procédé d'interaction (E1) selon la revendication 3, **caractérisé en ce que** le premier corps image (11) recouvre le deuxième corps percevant (22) et le deuxième corps image (21) recouvre le premier corps percevant (12).

5. Procédé d'interaction (E1) selon l'une quelconque des revendications 1 à 4, **caractérisé en ce qu'**au moins la première étape de déformation (E11) est adaptée à exprimer, via le premier organe haptique (10), une direction privilégiée dans l'espace physique réel (4).

6. Procédé d'interaction (E1) selon la revendication 5, **caractérisé en ce qu'**au moins la deuxième étape de déformation (E12) est adaptée à exprimer, via le deuxième organe haptique (20), la direction privilégiée dans l'espace physique réel (4).

7. Procédé d'interaction (E1) selon l'une quelconque des revendications 1 à 6, **caractérisé en ce que** le premier stimulateur sensoriel (1) comprend une première source (16) d'énergie électrique adaptée à alimenter au moins le premier organe haptique (10) en énergie électrique, et
**en ce que** le deuxième stimulateur sensoriel (2) comprend une deuxième source (26) d'énergie électrique adaptée à alimenter au moins le deuxième organe haptique (20) en énergie électrique.

8. Procédé d'interaction (E1) selon l'une quelconque des revendications 1 à 7, **caractérisé en ce que** l'un stimulateur sensoriel parmi le premier stimulateur sensoriel (1) et le deuxième stimulateur sensoriel (2) comporte :
• des moyens de télécommunication (15), (25) adaptés à communiquer au moins avec un équipement distant, et
• au moins une première couche logicielle (31) adaptée à représenter l'espace virtuel commun (3) conçu pour être partagé avec l'équipement distant,
**en ce que** l'équipement distant consiste en l'autre stimulateur sensoriel parmi le premier stimulateur sensoriel (1) et le deuxième stimulateur sensoriel (2).

9. Procédé d'interaction (E1) selon l'une quelconque des revendications 1 à 8, **caractérisé en ce que** le premier organe haptique (10) comprend :
• un premier écran tactile (100) adapté à commander les déplacements du premier corps percevant (12) dans l'espace virtuel commun (3),
• au moins deux premiers traducteurs (101) d'expression sensorielle distincts l'un de l'autre et adaptés à traduire au moins le premier état actif (A1) du premier stimulateur sensoriel (1),
• une première nappe (102) de capteurs de pression adaptée à déformer au moins le premier corps image (11) dans l'espace virtuel commun (3) au moins lorsque le premier stimulateur sensoriel (1) se trouve dans le premier état actif (A1).

10. Procédé d'interaction (E1) selon la revendication 9, **caractérisé en ce que** le deuxième organe haptique (20) comprend :
• un deuxième écran tactile (200) adapté à commander les déplacements du deuxième corps percevant (22) dans l'espace virtuel commun (3),
• au moins deux deuxièmes traducteurs (201) d'expression sensorielle distincts l'un de l'autre et adaptés à traduire au moins le deuxième état actif (A2) du deuxième stimulateur sensoriel (2),
• une deuxième nappe (202) de capteurs de pression adaptée à déformer au moins le deuxième corps image (21) dans l'espace virtuel commun (3) au moins lorsque le deuxième stimulateur sensoriel (2) se trouve dans le deuxième état actif (A2).

11. Procédé d'interaction (E1) selon la revendication 9, **caractérisé en ce que** les premiers traducteurs (101) d'expression sensorielle et les deuxièmes traducteurs (201) d'expression sensorielle comportent des moyens techniques adaptés à produire des odeurs.

12. Procédé d'interaction (E1) selon l'une quelconque des revendications 1 à 7, **caractérisé en ce que** le premier organe haptique (10) comprend :
• un premier écran tactile (100) adapté à commander les déplacements du premier corps percevant (12) dans l'espace virtuel commun (3),
• un premier traducteur droit (1011) d'expression sensorielle adapté à traduire le premier état actif (A1) du premier stimulateur sensoriel (1),
• une première nappe (102) de capteurs de pression adaptée à déformer au moins le premier corps image (11) dans l'espace virtuel commun (3) au moins lorsque le premier stimulateur sensoriel (1) se trouve dans le premier état actif (A1), et
• un premier traducteur gauche (1012) d'expression sensorielle distinct du premier traducteur droit (1011) d'expression sensorielle, ce premier traducteur gauche (1012) d'expression sensorielle étant adapté à reproduire les déformations du deuxième corps image (21) par le deuxième organe haptique (20).

13. Procédé d'interaction (E1) selon l'une quelconque des revendications 1 à 7, **caractérisé en ce que** le premier stimulateur sensoriel (1) comporte des moyens de télécommunication (15) adaptés à communiquer avec un serveur distant (6),
**en ce que** le deuxième stimulateur sensoriel (2) comporte des moyens de télécommunication (25) adaptés à communiquer avec le serveur distant (6), et
**en ce que** le serveur distant (6) comporte au moins une deuxième couche logicielle (32) adaptée à représenter l'espace virtuel commun (3).

14. Utilisation du procédé selon l'une quelconque des revendications 1 à 13 dans des outils de communication à distance et de manière haptique entre êtres vivants.

15. Utilisation du procédé selon la revendication 13 dans un système d'interaction (5) à distance et de manière haptique entre êtres vivants, le système d'interaction (5) comportant :
• au moins un premier stimulateur sensoriel (1) et au moins un deuxième stimulateur sensoriel (2) distinct du premier stimulateur sensoriel (1), les premier et deuxième stimulateurs sensoriels (1), (2) étant représentés dans un espace virtuel commun (3),
• le premier stimulateur sensoriel (1) comportant au moins un premier organe haptique (10),
• le deuxième stimulateur sensoriel (2) comportant au moins un deuxième organe haptique (20),
• le premier stimulateur sensoriel (1) étant représenté dans l'espace virtuel commun (3) par au moins un premier corps image (11) lié à au moins un premier corps percevant (12) via un premier lien virtuel (13),
• le premier organe haptique (10) étant adapté à déplacer au moins le premier corps percevant (12) dans l'espace virtuel commun (3),
• le deuxième stimulateur sensoriel (2) étant représenté dans l'espace virtuel commun (3) par au moins un deuxième corps image (21) lié à au moins un deuxième corps percevant (22) via un deuxième lien virtuel (23),
• le deuxième organe haptique (20) étant adapté à déplacer au moins le deuxième corps percevant (22) dans l'espace virtuel commun (3),
• le premier stimulateur sensoriel (1) étant adapté à se mettre dans un premier état actif (A1) lorsque le premier corps percevant (12) se déplaçant dans l'espace virtuel commun (3) touche le deuxième corps image (21) dans l'espace virtuel commun (3),
• un serveur distant (6) comportant au moins une deuxième couche logicielle (32) adaptée à représenter l'espace virtuel commun (3), les premier et deuxième stimulateurs sensoriels (1), (2) comportant respectivement des premier et deuxième moyens de télécommunication (15), (25) adaptés à communiquer au moins avec le serveur distant (6).

## Patentansprüche

1. Verfahren zur Interaktion (E1) zwischen mindestens einem ersten sensorischen Stimulator (1) und mindestens einem zweiten sensorischen Stimulator (2), welcher vom ersten sensorischen Stimulator (1) getrennt ist,
wobei der erste sensorische Stimulator (1) mindestens ein erstes haptisches Element (10) umfasst,
wobei der zweite sensorische Stimulator (2) mindestens ein zweites haptisches Element (20) umfasst,
wobei der erste und zweite sensorische Stimulator (1), (2) in einem gemeinsamen virtuellen Raum (3) dargestellt werden,
wobei ihre Darstellungen dazu ausgebildet sind, sich diesen gemeinsamen virtuellen Raum zu teilen,
wobei die Darstellung des ersten sensorischen Stimulators (1) im gemeinsamen virtuellen Raum (3) mindestens einen ersten Bildkörper (11) umfasst, der über eine erste virtuelle Verbindung (13) mit mindestens einem ersten Wahrnehmungskörper (12) verbunden ist,
wobei das erste haptische Element (10) dazu ausgebildet ist, mindestens den ersten Wahrnehmungskörper (12) im gemeinsamen virtuellen Raum (3) zu bewegen,
wobei die Darstellung des zweiten sensorischen Stimulators (2) im gemeinsamen virtuellen Raum (3) mindestens einen zweiten Bildkörper (21) umfasst, der über eine zweite virtuelle Verbindung (23) mit mindestens einem zweiten Wahrnehmungskörper (22) verbunden ist,
wobei das zweite haptische Element (20) dazu ausgebildet ist, mindestens den zweiten Wahrnehmungskörper (22) im gemeinsamen virtuellen Raum (3) zu bewegen,
wobei der erste sensorische Stimulator (1) dazu ausgebildet ist, sich in einen ersten aktiven Zustand (A1) zu versetzen, wenn der erste Wahrnehmungskörper (12), der sich im gemeinsamen virtuellen Raum (3) bewegt, den zweiten Bildkörper (21) im gemeinsamen virtuellen Raum (3) berührt,
wobei das Interaktionsverfahren (E1) mindestens einen ersten Schritt des Verformens (E11) von mindestens dem ersten Bildkörper (11) im gemeinsamen virtuellen Raum (3) umfasst, wenn sich mindestens der erste sensorische Stimulator (1) im ersten aktiven Zustand (A1) befindet, wobei der erste Verformungsschritt (E11) mithilfe des ersten haptischen Elements (10) initiiert wird,
wobei der zweite sensorische Stimulator (2) dazu ausgebildet ist, sich in einen zweiten aktiven Zustand (A2) zu versetzen, wenn der zweite Wahrnehmungskörper (22), der sich im gemeinsamen virtuellen Raum (3) bewegt, den ersten Bildkörper (11) im gemeinsamen virtuellen Raum (3) berührt, und
wobei das Interaktionsverfahren (E1) mindestens einen zweiten Schritt des Verformens (E12) von mindestens dem zweiten Bildkörper (21) im gemeinsamen virtuellen Raum (3) umfasst, wenn sich mindestens der zweite sensorische Stimulator (2) im zweiten aktiven Zustand (A2) befindet, wobei der zweite Verformungsschritt (E12) mithilfe des zweiten haptischen Elements (20) initiiert wird,
**dadurch gekennzeichnet, dass** das Interaktionsverfahren (E1) umfasst:
- einen Schritt des Positionierens (E20) des ersten und zweiten sensorischen Stimulators (1), (2) in einem realen physischen Raum (4) mithilfe der integrierten Geolokalisierungsmittel (14) jeweils durch den ersten und zweiten sensorischen Stimulator (1), (2),
- einen Schritt des Rekonstruierens (E30) des realen physischen Raums (4) im gemeinsamen virtuellen Raum (3), und
- einen Schritt des Projizierens (E40), im gemeinsamen virtuellen Raum (3), der jeweiligen realen Bewegungen des ersten und zweiten sensorischen Stimulators (1), (2) im realen physischen Raum (4).

2. Interaktionsverfahren (E1) nach Anspruch 1, **dadurch gekennzeichnet, dass** jede Verformung des ersten oder des zweiten Bildkörpers (11), (21) eine entsprechende Verformung des ersten Wahrnehmungskörpers (12) beziehungsweise des zweiten Wahrnehmungskörpers (22) nach sich zieht oder von derselben initiiert wird.

3. Interaktionsverfahren (E1) nach Anspruch 1 oder 2, **dadurch gekennzeichnet, dass** es mindestens einen Explorationsmodus (E100) umfasst, in dem die erste und zweite virtuelle Verbindung (13), (23) im gemeinsamen virtuellen Raum (3) nicht verformbar sind,
dadurch, dass der erste Bildkörper (11) dazu ausgebildet ist, sich mit dem ersten Wahrnehmungskörper (12) im gemeinsamen virtuellen Raum (3) zu bewegen,
dadurch, dass der zweite Bildkörper (21) dazu ausgebildet ist, sich mit dem zweiten Wahrnehmungskörper (22) im gemeinsamen virtuellen Raum (3) zu bewegen, und
dadurch, dass der erste und zweite Verformungsschritt (E11), (E12) mindestens im Laufe des Explorationsmodus (E100) stattfinden.

4. Interaktionsverfahren (E1) nach Anspruch 3, **dadurch gekennzeichnet, dass** der erste Bildkörper (11) den zweiten Wahrnehmungskörper (22) überdeckt, und der zweite Bildkörper (21) den ersten Wahrnehmungskörper (12) überdeckt.

5. Interaktionsverfahren (E1) nach einem der Ansprüche 1 bis 4, **dadurch gekennzeichnet, dass** mindestens der erste Verformungsschritt (E11) dazu ausgebildet ist, über das erste haptische Element (10) eine bevorzugte Richtung im realen physischen Raum (4) auszudrücken.

6. Interaktionsverfahren (E1) nach Anspruch 5, **dadurch gekennzeichnet, dass** mindestens der zweite Verformungsschritt (E12) dazu ausgebildet ist, über das zweite haptische Element (20) die bevorzugte Richtung im realen physischen Raum (4) auszudrücken.

7. Interaktionsverfahren (E1) nach einem der Ansprüche 1 bis 6, **dadurch gekennzeichnet, dass** der erste sensorische Stimulator (1) eine erste elektrische Energiequelle (16) umfasst, die dazu ausgebildet ist, mindestens das erste haptische Element (10) mit elektrischer Energie zu versorgen, und
dadurch, dass der zweite sensorische Stimulator (2) eine zweite elektrische Energiequelle (26) umfasst, die dazu ausgebildet ist, mindestens das zweite haptische Element (20) mit elektrischer Energie zu versorgen.

8. Interaktionsverfahren (E1) nach einem der Ansprüche 1 bis 7, **dadurch gekennzeichnet, dass** ein sensorischer Stimulator aus dem ersten sensorischen Stimulator (1) und dem zweiten sensorischen Stimulator (2) umfasst:
- Telekommunikationsmittel (15), (25), die dazu ausgebildet sind, mindestens mit einer entfernten Einrichtung zu kommunizieren, und
- mindestens eine erste Softwareschicht (31), die dazu ausgebildet ist, den gemeinsamen virtuellen Raum (3) darzustellen, der dafür konzipiert ist, mit der entfernten Einrichtung geteilt zu werden,
dadurch, dass die entfernte Einrichtung im anderen sensorischen Stimulator aus dem ersten sensorischen Stimulator (1) und dem zweiten sensorischen Stimulator (2) besteht.

9. Interaktionsverfahren (E1) nach einem der Ansprüche 1 bis 8, **dadurch gekennzeichnet, dass** das erste haptische Element (10) umfasst:
- einen ersten Touchscreen (100), der dazu ausgebildet ist, die Bewegungen des ersten Wahrnehmungskörpers (12) im gemeinsamen virtuellen Raum (3) zu steuern,
- mindestens zwei erste sensorische Ausdrucksübersetzer (101), die voneinander getrennt und dazu ausgebildet sind, mindestens den ersten aktiven Zustand (A1) des ersten sensorischen Stimulators (1) zu übersetzen,
- eine erste Drucksensorlage (102), die dazu ausgebildet ist, mindestens den ersten Bildkörper (11) im gemeinsamen virtuellen Raum (3) mindestens dann zu verformen, wenn sich der erste sensorische Stimulator (1) im ersten aktiven Zustand (A1) befindet.

10. Interaktionsverfahren (E1) nach Anspruch 9, **dadurch gekennzeichnet, dass** das zweite haptische Element (20) umfasst:
- einen zweiten Touchscreen (200), der dazu ausgebildet ist, die Bewegungen des zweiten Wahrnehmungskörpers (22) im gemeinsamen virtuellen Raum (3) zu steuern,
- mindestens zwei zweite sensorische Ausdrucksübersetzer (201), die voneinander getrennt und dazu ausgebildet sind, mindestens den zweiten aktiven Zustand (A2) des zweiten sensorischen Stimulators (2) zu übersetzen,
- eine zweite Drucksensorlage (202), die dazu ausgebildet ist, mindestens den zweiten Bildkörper (21) im gemeinsamen virtuellen Raum (3) mindestens dann zu verformen, wenn sich der zweite sensorische Stimulator (2) im zweiten aktiven Zustand (A2) befindet.

11. Interaktionsverfahren (E1) nach Anspruch 9, **dadurch gekennzeichnet, dass** die ersten sensorischen Ausdrucksübersetzer (101) und die zweiten sensorischen Ausdrucksübersetzer (201) technische Mittel umfassen, die dazu ausgebildet sind, Gerüche zu produzieren.

12. Interaktionsverfahren (E1) nach einem der Ansprüche 1 bis 7, **dadurch gekennzeichnet, dass** das erste haptische Element (10) umfasst:
- einen ersten Touchscreen (100), der dazu ausgebildet ist, die Bewegungen des ersten Wahrnehmungskörpers (12) im gemeinsamen virtuellen Raum (3) zu steuern,
- einen ersten rechten sensorischen Ausdrucksübersetzer (1011), der dazu ausgebildet ist, den ersten aktiven Zustand (A1) des ersten sensorischen Stimulators (1) zu übersetzen,
- eine erste Drucksensorlage (102), die dazu ausgebildet ist, mindestens den ersten Bildkörper (11) im gemeinsamen virtuellen Raum (3) mindestens dann zu verformen, wenn sich der erste sensorische Stimulator (1) im ersten aktiven Zustand (A1) befindet, und
- einen ersten linken sensorischen Ausdrucksübersetzer (1012), der vom ersten rechten sensorischen Ausdrucksübersetzer (1011) getrennt ist, wobei dieser erste linke sensorische Ausdrucksübersetzer (1012) dazu ausgebildet ist, die Verformungen des zweiten Bildkörpers (21) durch das zweite haptische Element (20) zu reproduzieren.

13. Interaktionsverfahren (E1) nach einem der Ansprüche 1 bis 7, **dadurch gekennzeichnet, dass** der erste sensorische Stimulator (1) Telekommunikationsmittel (15) umfasst, die dazu ausgebildet sind, mit einem entfernten Server (6) zu kommunizieren,
dadurch, dass der zweite sensorische Stimulator (2) Telekommunikationsmittel (25) umfasst, die dazu ausgebildet sind, mit dem entfernten Server (6) zu kommunizieren, und
dadurch, dass der entfernte Server (6) mindestens eine zweite Softwareschicht (32) umfasst, die dazu ausgebildet ist, den gemeinsamen virtuellen Raum (3) darzustellen.

14. Verwendung des Verfahrens nach einem der Ansprüche 1 bis 13 in Tools zur Fern- und haptischen Kommunikation zwischen Lebewesen.

15. Verwendung des Verfahrens nach Anspruch 13 in einem System zur Fern- und haptischen Interaktion (5) zwischen Lebewesen, wobei das Interaktionssystem (5) umfasst:
- mindestens einen ersten sensorischen Stimulator (1) und mindestens einen zweiten sensorischen Stimulator (2), der vom ersten sensorischen Stimulator (1) getrennt ist, wobei der erste und zweite sensorische Stimulator (1), (2) in einem gemeinsamen virtuellen Raum (3) dargestellt werden,
- wobei der erste sensorische Stimulator (1) mindestens ein erstes haptisches Element (10) umfasst,
- wobei der zweite sensorische Stimulator (2) mindestens ein zweites haptisches Element (20) umfasst,
- wobei der erste sensorische Stimulator (1) im gemeinsamen virtuellen Raum (3) durch mindestens einen ersten Bildkörper (11) dargestellt wird, der über eine erste virtuelle Verbindung (13) mit mindestens einem ersten Wahrnehmungskörper (12) verbunden ist,
- wobei das erste haptische Element (10) dazu ausgebildet ist, mindestens den ersten Wahrnehmungskörper (12) im gemeinsamen virtuellen Raum (3) zu bewegen,
- wobei der zweite sensorische Stimulator (2) im gemeinsamen virtuellen Raum (3) durch mindestens einen zweiten Bildkörper (21) dargestellt wird, der über eine zweite virtuelle Verbindung (23) mit mindestens einem zweiten Wahrnehmungskörper (22) verbunden ist,
- wobei das zweite haptische Element (20) dazu ausgebildet ist, mindestens den zweiten Wahrnehmungskörper (22) im gemeinsamen virtuellen Raum (3) zu bewegen,
- wobei der erste sensorische Stimulator (1) dazu ausgebildet ist, sich in einen ersten aktiven Zustand (A1) zu versetzen, wenn der erste Wahrnehmungskörper (12), der sich im gemeinsamen virtuellen Raum (3) bewegt, den zweiten Bildkörper (21) im gemeinsamen virtuellen Raum (3) berührt,
- wobei ein entfernter Server (6) mindestens eine zweite Softwareschicht (32) umfasst, die dazu ausgebildet ist, den gemeinsamen virtuellen Raum (3) darzustellen, wobei der erste und zweite sensorische Stimulator (1), (2) jeweils erste und zweite Telekommunikationsmittel (15), (25) umfassen, die dazu ausgebildet sind, mit mindestens dem entfernten Server (6) zu kommunizieren.

## Claims

1. Method for interaction (E1) between at least one first sensory stimulator (1) and at least one second sensory stimulator (2) separate from the first sensory stimulator (1),
the first sensory stimulator (1) comprising at least one first haptic unit (10),
the second sensory stimulator (2) comprising at least one second haptic unit (20),
the first and second sensory stimulators (1), (2) being represented in a common virtual space (3),
their representations being suitable for sharing this common virtual space,
the representation of the first sensory stimulator (1) in the common virtual space (3) comprising at least one first image body (11) linked to at least one first perceiving body (12) via a first virtual link (13),
the first haptic unit (10) being suitable for moving at least the first perceiving body (12) in the common virtual space (3),
the representation of the second sensory stimulator (2) in the common virtual space (3) comprising at least one second image body (21) linked to at least one second perceiving body (22) via a second virtual link (23),
the second haptic unit (20) being suitable for moving at least the second perceiving body (22) in the common virtual space (3),
the first sensory stimulator (1) being suitable for being placed in a first active state (A1) when the first perceiving body (12) moving in the common virtual space (3) touches the second image body (21) in the common virtual space (3),
the interaction method (E1) comprising at least one first step of deforming (E11) at least the first image body (11) in the common virtual space (3) when at least the first sensory stimulator (1) is in the first active state (A1), the first step of deforming (E11) being initiated by means of the first haptic unit (10),
the second sensory stimulator (2) being suitable for being placed in a second active state (A2) when the second perceiving body (22) moving in the common virtual space (3) touches the first image body (11) in the common virtual space (3), and
the interaction method (E1) comprising at least one second step of deforming (E12) at least the second image body (21) in the common virtual space (3) when at least the second sensory stimulator (2) is in the second active state (A2), the second step of deforming (E12) being initiated by means of the second haptic unit (20),
**characterised in that** the interaction method (E1) comprises:
- a step of positioning (E20) first and second sensory stimulators (1), (2) in a real physical space (4) using means of geolocating (14) embedded respectively by the first and second sensory stimulators (1), (2),
- a step of reconstituting (E30) the real physical space (4) in the common virtual space (3), and
- a step of projecting (E40) in the common virtual space (3) real respective movements of the first and second sensory stimulators (1), (2) in the real physical space (4).

2. Method for interaction (E1) according to claim 1, **characterised in that** any deforming of the first or of the second image body (11), (21) results in, or is initiated by, a corresponding deforming of the first perceiving body (12) or of the second perceiving body (22), respectively.

3. Method for interaction (E1) according to claim 1 or 2, **characterised in that** it comprises at least one exploratory mode (E100) wherein the first and second virtual links (13), (23), cannot be deformed in the common virtual space (3),
**in that** the first image body (11) is suitable for being moved in the common virtual space (3) with the first perceiving body (12),
**in that** the second image body (21) is suitable for being moved in the common virtual space (3) with the second perceiving body (22), and
**in that** the first and second steps of deforming (E11), (E12) are carried out at least during the exploratory mode (E100).

4. Method for interaction (E1) according to claim 3, **characterised in that** the first image body (11) covers the second perceiving body (22) and the second image body (21) covers the first perceiving body (12).

5. Method for interaction (E1) according to any of claims 1 to 4, **characterised in that** at least the first step of deforming (E11) is suitable for expressing, via the first haptic unit (10), a favoured direction in the real physical space (4).

6. Method for interaction (E1) according to claim 5, **characterised in that** at least the second step of deforming (E12) is suitable for expressing, via the second haptic unit (20), the favoured direction in the real physical space (4).

7. Method for interaction (E1) according to any of claims 1 to 6, **characterised in that** the first sensory stimulator (1) comprises a first source (16) of electrical energy suitable for supplying at least the first haptic unit (10) with electrical energy, and
**in that** the second sensory stimulator (2) comprises a second source (26) of electrical energy suitable for supplying at least the second haptic unit (20) with electrical energy.

8. Method for interaction (E1) according to any of claims 1 to 7, **characterised in that** one sensory stimulator among the first sensory stimulator (1) and the second sensory stimulator (2) comprises:
- means of telecommunicating (15), (25) suitable for communicating at least with a remote piece of equipment, and
- at least one first software layer (31) suitable for representing the common virtual space (3) designed to be shared with the remote equipment,
**in that** the remote equipment consists of the other sensory stimulator among the first sensory stimulator (1) and the second sensory stimulator (2).

9. Method for interaction (E1) according to any of claims 1 to 8, **characterised in that** the first haptic unit (10) comprises:
- a first touch-sensitive screen (100) suitable for controlling the movements of the first perceiving body (12) in the common virtual space (3),
- at least two first translators (101) of sensory expression separate from each other and suitable for translating at least the first active state (A1) of the first sensory stimulator (1),
- a first set (102) of pressure sensors suitable for deforming at least the first image body (11) in the common virtual space (3) at least when the first sensory stimulator (1) is in the first active state (A1).

10. Method for interaction (E1) according to claim 9, **characterised in that** the second haptic unit (20) comprises:
- a second touch-sensitive screen (200) suitable for controlling the movements of the second perceiving body (22) in the common virtual space (3),
- at least two second translators (201) of sensory expression separate from each other and suitable for translating at least the second active state (A2) of the second sensory stimulator (2),
- a second set (202) of pressure sensors suitable for deforming at least the second image body (21) in the common virtual space (3) at least when the second sensory stimulator (2) is in the second active state (A2).

11. Method for interaction (E1) according to claim 9, **characterised in that** the premiers translators (101) of sensory expression and the second translators (201) of sensory expression comprise technical means suitable for producing odours.

12. Method for interaction (E1) according to any of claims 1 to 7, **characterised in that** the first haptic unit (10) comprises:
- a first touch-sensitive screen (100) suitable for controlling the movements of the first perceiving body (12) in the common virtual space (3),
- a first right translator (1011) of sensory expression suitable for translating the first active state (A1) of the first sensory stimulator (1),
- a first set (102) of pressure sensors suitable for deforming at least the first image body (11) in the common virtual space (3) at least when the first sensory stimulator (1) is in the first active state (A1), and
- a first left translator (1012) of sensory expression separate from the first right translator (1011) of sensory expression, this first left translator (1012) of sensory expression being suitable for reproducing the deformations of the second image body (21) by the second haptic unit (20).

13. Method for interaction (E1) according to any of claims 1 to 7, **characterised in that** the first sensory stimulator (1) comprises means of telecommunicating (15) suitable for communicating with a remote server (6),
**in that** the second sensory stimulator (2) comprises means of telecommunicating (25) suitable for communicating with the remote server (6), and
**in that** the remote server (6) comprises at least one second software layer (32) suitable for representing the common virtual space (3).

14. Use of the method according to any of claims 1 to 13 in remote communication tools and in a haptic manner between living beings.

15. Use of the method according to claim 13 in a remote interaction system (5) and in a haptic manner between living beings, the interaction system (5) comprising:
- at least one first sensory stimulator (1) and at least one second sensory stimulator (2) separate from the first sensory stimulator (1), the first and second sensory stimulators (1), (2) being represented in a common virtual space (3),
- the first sensory stimulator (1) comprising at least one first haptic unit (10),
- the second sensory stimulator (2) comprising at least one second haptic unit (20),
- the first sensory stimulator (1) being represented in the common virtual space (3) by at least one first image body (11) linked to at least one first perceiving body (12) via a first virtual link (13),
- the first haptic unit (10) being suitable for moving at least the first perceiving body (12) in the common virtual space (3),
- the second sensory stimulator (2) being represented in the common virtual space (3) by at least one second image body (21) linked to at least one second perceiving body (22) via a second virtual link (23),
- the second haptic unit (20) being suitable for moving at least the second perceiving body (22) in the common virtual space (3),
- the first sensory stimulator (1) being suitable for being placed in a first active state (A1) when the first perceiving body (12) moving in the common virtual space (3) touches the second image body (21) in the common virtual space (3),
- a remote server (6) comprising at least one second software layer (32) suitable for representing the common virtual space (3), the first and second sensory stimulators (1), (2) comprising respectively first and second means for telecommunicating (15), (25) suitable for communicating at least with the remote server (6).
